# EUROPEAN PATENT SPECIFICATION

(11) **EP 2 208 596 B1**
(45) Date of publication and mention of the grant of the patent: **15.08.2012**
(21) Application number: 09252925.4
(22) Date of filing: 30.12.2009
(51) Int. Cl.: B29C 33/16, A44B 18/00, B29C 44/12, A47C 31/02, B65H 3/16, B29C 31/00

(54) **Systems and methods of installing hook fastener elements in a mold assembly**
Systeme und Verfahren zum Einbauen von Hakenbandelementen in einer Gussformeinheit
Systèmes et procédé d'installation d'éléments de fixation de crochet sur un ensemble de moule

(30) Priority: 14.01.2009 US 353538
(43) Date of publication of application: 21.07.2010
(73) Proprietor: YKK Corporation, Chiyoda-ku Tokyo (JP)
(72) Inventor: Nozawa, Yasutoshi, Macon Georgia 31217 (US); Nguyen, Thanh P., Novi Michigan 48375 (US)
(74) Representative: White, Duncan Rohan

(56) References cited:
- EP-A1- 1 300 229
- JP-A- 2003 011 137
- JP-A- 2006 205 641
- US-A- 1 639 312
- US-A- 1 783 232
- US-A1- 2003 197 414

## Description

The present invention relates to systems and methods of installing hook fastener elements in a mold assembly.

Hook and loop fastening structures may be used in various applications to secure objects adjacent each other. For example, hook fastening strips may be molded onto a surface of a foam bun of an automobile seat, and loop material may be provided on an inner surface of an automobile seat covering to engage the hook fastening strips and secure the seat covering to the foam bun. Flexible hook fastening strips may be utilized on curve-shaped portions of the foam bun, and straight hook fastening strips may be utilized on straight-shaped portions of the foam bun, which is, for example, provided along a longitudinal direction of the foam bun at the center of the bun in a width direction.

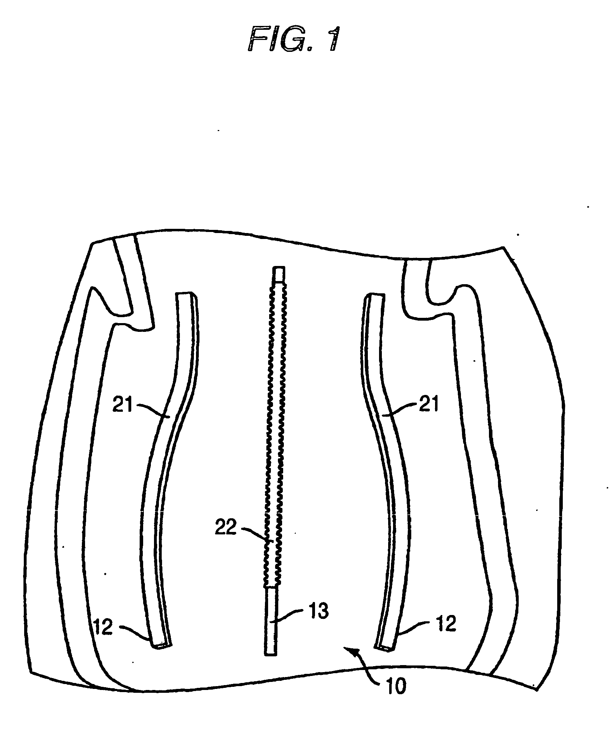

Figure 1 illustrates an embodiment of a mold **10** for molding the foam bun of a particular automobile seat. The mold **10** includes trenches **12, 13** for receiving the hook fastening strips **21, 22,** respectively, prior to injection of the foam for forming the foam bun. An operator disposes a straight hook fastening strip **22** within a straight trench **13** and a flexible hook fastening strip **21** within each curved trench 12. To hold the hook fastening strips **21, 22** in the trenches **12, 13** and to align each strip **21, 22** properly within each trench **12, 13,** the trenches **12, 13** may include a magnetic surface and the hook fastening strips **21, 22** may include a monofilament having magnetic properties (e.g., carbon steel or iron) formed within the fastening strips **21, 22.**

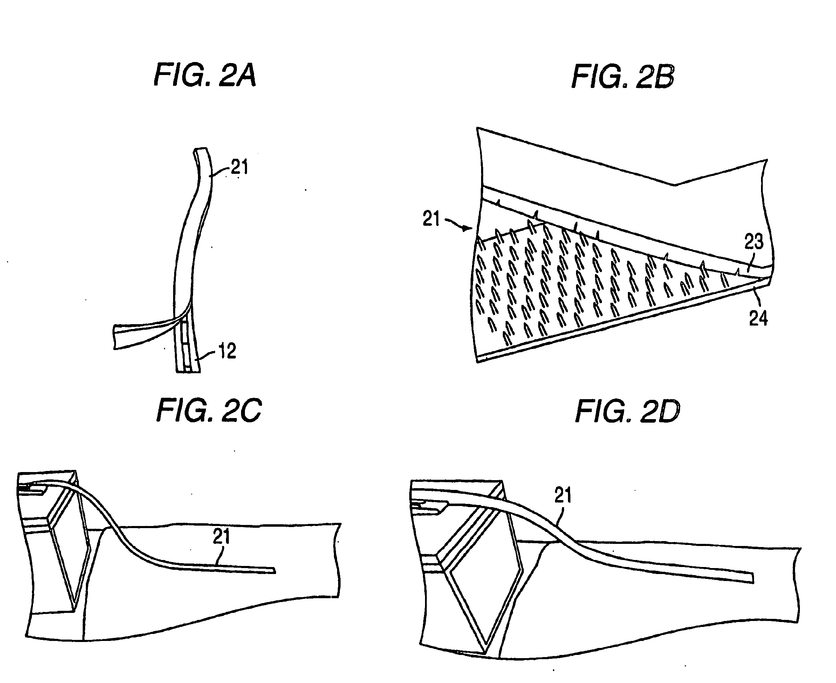

Prior art flexible hook fastener strips such as the fastener strips **21** shown in Figures 1 and 2A-2D are die cut into the shape and length of the trench **12,** which limits the fastener strips to use only with trenches having that particular shape and length. In addition, a covering **23** is disposed over the hooks to prevent foam from seeping between the hooks. However, an operator has to remove this covering **23** from a base **24** on which the hooks are disposed after removing the molded foam bun from the mold **10,** which results in an extra manufacturing step for the operator and wasted material for the manufacturer. Furthermore, the known fastener strips **21** are flimsy, making them difficult for the operator to manipulate when disposing them within the trenches **12.**

Straight fastener strips **22,** such as those disclosed in U.S. Published Patent Application Number 2007/0240289 and shown in Figure 3, provide a sufficient level of stiffness in a plane perpendicular to an upper surface of the fastener strips **22,** but these fastener strips **22** lack flexibility in a plane containing the upper surface of the fastener strips **22.** Accordingly, these strips **22** can only be used in substantially straight trenches. In addition, these length of these strips **22** are cut (or formed) to be substantially the length of the trench in which the strip **22** is to be disposed. Accordingly, manufacturers that use the strips **22** have to stock different length strips **22** for use in trenches having different lengths.

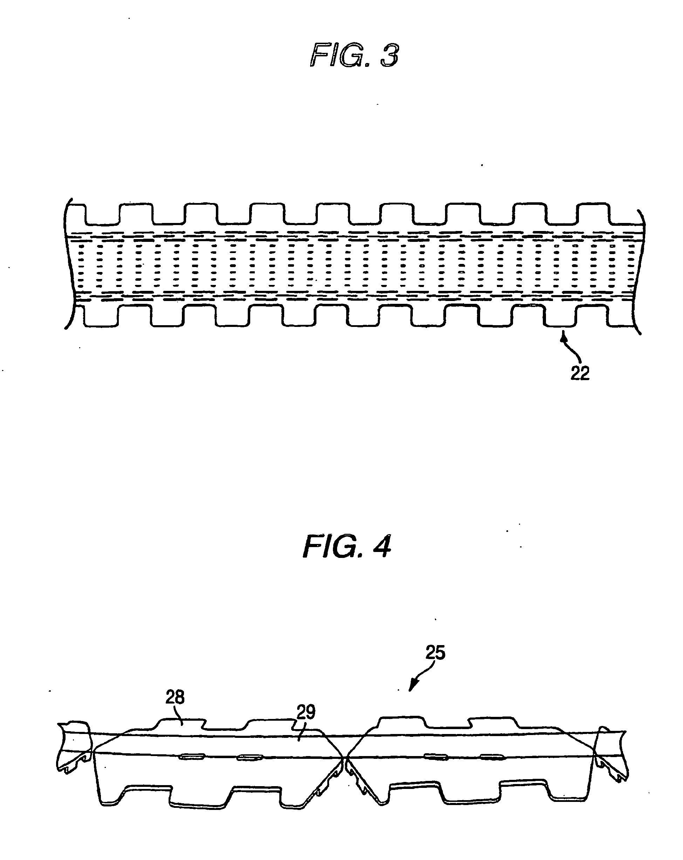

There has been developed another type of fastener strip assembly **25,** as shown in Figure 4, which includes a plurality of straight fastener strips **28** that are joined together in an end-to-end relationship by an elongated connecting member **29.** Like the known fastener strips described above, the fastener strip assembly **25** according to various embodiments has a total length that is substantially the length of the trench in which the fastener strip assembly **25** is to be disposed. Thus, fastener strip assemblies **25** having varying lengths are assemble to accommodate trenches having varying lengths. Furthermore, the fastener strips **28** used in the fastener strip assembly **25** are cut to varying lengths to accommodate fastener strip assemblies **25** to be used in trenches having varying radii of contour. For example, for trenches having a smaller radius of contour, the fastener strips **28** used in the fastener strip assembly **25** have a shorter length to allow the fastener strip assembly **25** to follow the contour. Similarly, for trenches having a greater radius of contour or straight trenches, the fastener strips **28** used in the fastener strip assembly **25** can have a longer length. Thus, this arrangement results in the need to assemble fastener strip assemblies **25** using fastener strips **28** having different lengths and to assemble fastener strip assemblies **25** having different overall lengths to accommodate various trench lengths and curvatures.

Thus, a need in the art exists for an improved system and method for installing hook fastener strips within straight and curved trenches of a mold assembly and provides for increased efficiency in the manufacturing and installation process.

EP-A-1300229 describes connected fastening members and a process for production of a resin molded article with fastening members. The mold-in fastening members are connected with each other by a flexible connecting means that is disposed on the back surface thereof.

JP 2003 011137 describes a foamed molded product and method for manufacturing the same. A surface fastener having a locking part is provided on the shingle surface of a strip-like base part and having an anchor part provided on the other surface thereof is housed in the housing recessed part of the mold member attached to a mold so that the locking part is positioned on the surface side of the mold and a foamable raw liquid composition of polyurethane foam is injected to perform foam molding to manufacture the polyurethane foam molded product having the locking part provided thereto so as to be positioned on the surface thereof.

US-A-1783232 describes a washer loading device for placing perforated articles upon pins, for example for placing washers upon pins of rubber heal molds.

### BRIEF SUMMARY OF VARIOUS EMBODIMENTS OF THE INVENTION

Various embodiments of a mold assembly system include a mold defining at least one trench along a surface of the mold and two or more hook fastener elements disposed on the surface of the trench in an end-to-end relationship. Each hook fastener element includes: (1) an elongated base, (2) a plurality of hooks extending upwardly from an upper surface of the base, and (3) a magnetic material disposed within the base. The hook fastener elements are unattached to each other and are separately disposed within the trench, and the magnetic portion of the trench is configured to attract the hook fastener elements, align the hook fastener elements, and hold the hook fastener elements adjacent thereto in an end-to-end relationship substantially along the length of the trench. In one embodiment, the two or more hook fastener elements are substantially the same length and are usable in straight trenches, curved trenches, or trenches having various lengths.

With the systems and methods for installing the hook fastener elements in a mold assembly according to the various embodiments of the present invention, it is possible to increase the efficiency in the manufacturing and installation processes when installing the hook fastener elements within the straight and curved trenches of the mold assembly.

### BRIEF DESCRIPTION OF THE DRAWINGS

Having thus described various embodiments of the invention in general terms, reference will now be made to the accompanying drawings, which are not necessarily drawn to scale, and wherein:
Figure 1 illustrates a view of a known mold assembly for forming a foam bun.
Figures 2A and 2B illustrate a known flexible hook fastener strip.
Figure 2C and 2D illustrate stiffness and flexibility qualities of the flexible hook fastener strip shown in Figures 2A and 2B.
Figure 3 illustrates a known straight fastener strip.
Figure 4 illustrates a bottom perspective view of a known fastener strip assembly.
Figure 5 illustrates a perspective view of an upper surface of a hook fastener element according to various embodiments of the invention.
Figure 6 illustrates a perspective view of lower surfaces of two hook fastener elements shown in Figure 5 disposed on a magnetic surface of a trench according to one embodiment of the invention.
Figure 7 illustrates a perspective view of an upper surface of a hook fastener element
Figure 8 illustrates a perspective view of lower surfaces of two hook fastener elements shown in Figure 7 disposed on a magnetic surface of a trench according to an alternative embodiment of the invention.
Figure 9 illustrates a partial plan view of a mold assembly according to one embodiment.
Figure 10 illustrates a dispensing apparatus for dispensing the hook fastener elements into a mold assembly according to one embodiment of the invention.
Figure 11 is a flow chart illustrating a method of manufacturing the hook fastener elements.
Figure 12 is a flow chart illustrating a method of installing the hook fastener elements.
Figure 13 is an enlarged plan view illustrating a hook fastener strip.
Figure 14A is a sectional view taken along the line A-A in Figure 13.
Figure 14B is a sectional view taken along the line B-B in Figure 13.
Figure 14C is a sectional view taken along the line C-C in Figure 13.
Figure 15 is an enlarged sectional view illustrating hook fastener elements obtained by the hook fastener strip shown in Figure 13 and installed in a trench.

### DETAILED DESCRIPTION OF VARIOUS EMBODIMENTS OF THE INVENTION

Various embodiments of the invention are described more fully hereinafter with reference to the accompanying drawings, in which some, but not all embodiments of the invention are shown in the figures. Indeed, these inventions may be embodied in many different forms and should not be construed as limited to the embodiments set forth herein; rather, these embodiments are provided so that this disclosure will satisfy applicable legal requirements.

### Brief Summary

Various embodiments of the invention provide a mold assembly system that includes a mold and two or more hook fastener elements. The mold defines at least one trench along a surface of the mold, and at least a portion of the trench is magnetic. The two or more hook fastener elements are unattached to each other and are disposed separately from each other in an end-to-end relationship on the trench. Each of the two or more hook fastener elements includes a base having an upper surface, a lower surface opposite the upper surface, a first end, and a second end opposite and spaced apart from the first end. A longitudinal axis extends from the first end to the second end, and a magnetic material is disposed within the base. The magnetic portion of the trench is configured to attract the two or more hook fastener elements, substantially align the longitudinal axes of the hook fastener elements with the longitudinal axis of the trench, and hold the hook fastener elements adjacent to each other in the trench. Here, the trench is a portion to which the hook fastener elements to be molded onto the foam bun are attracted by magnetic force. In the various embodiments of the invention, the trench means a magnetized portion in the raised portion raised from the surface of the mold.

In various embodiments, the hook fastener elements have substantially the same length. In addition, the length, i.e. the longitudinal length of a base which is described later may be between about 10 mm and about 50 mm. For example, in one embodiment, the length is about 25.4 mm, which is substantially shorter than the prior art hook fasteners. However, in various alternative embodiments, the hook fastener elements may have different lengths. For example, in various alternative embodiments, these lengths are relatively shorter than the straight hook fasteners known in the art to allow the hook fastener elements to be used in trenches having different profiles (e.g., straight or curved) and lengths.

Unlike the prior art hook fasteners described above, the hook fastener elements provide a single product for substantially any mold installation. For example, the hook fastener elements can be used in substantially any shaped trench, including straight trenches, curved trenches having various radii, and trenches having different lengths. In addition, because the hook fastener elements are relatively smaller than the prior art hook fasteners and are substantially the same length, the processes of manufacturing and maintaining inventory of the hook fastener elements are streamlined, according to one embodiment of the invention. Specifically, according to one embodiment of a process of manufacturing the hook fastener elements, the steps of spooling, storing, de-curling, setting up the proper cut length for the hook fastener based on the length of the trench in which the hook fastener is to be used, checking the length, and counting the number of parts having that length for inventory purposes are eliminated, resulting in a more efficient and cost effective manufacturing process. In addition, by providing a substantially single sized hook fastener element that can be used in various installations, according to various embodiments, inventory is simplified and reduced for the manufacturer using the hook fastener elements in its mold assemblies. Furthermore, by using a dispensing device to store the hook fastener elements and release them into the trench according to various embodiments, operators avoid the steps of having to turn away from each mold assembly to retrieve the appropriate hook fastener and then turn back toward the mold assembly to install the hook fastener. According to one embodiment, use of the dispensing device can reduce the number of operators from two or more to one per station.

More detailed descriptions of various embodiments of the hook fastener elements are provided below.

### Structure and Methods of Manufacturing a Hook Fastener Element

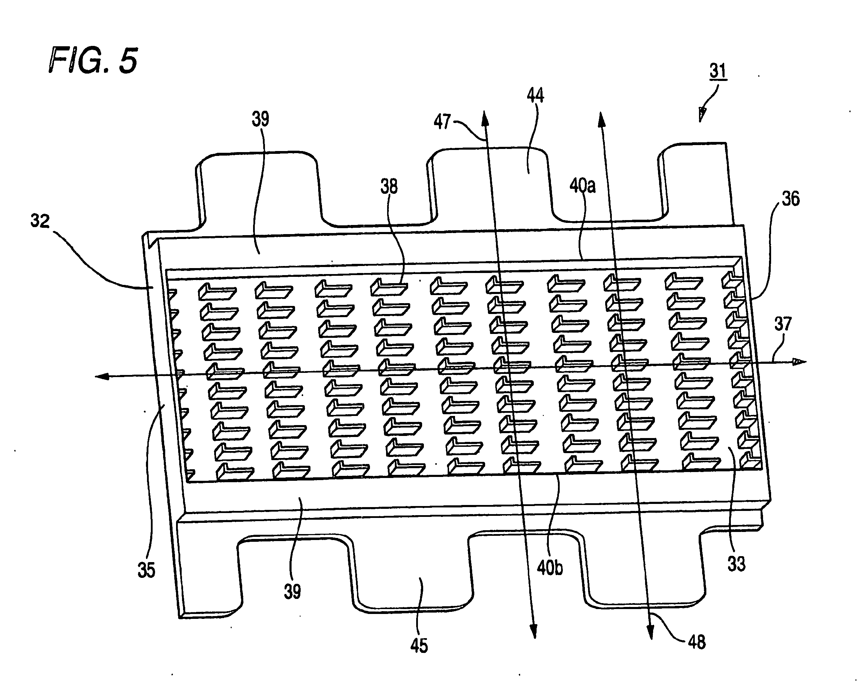

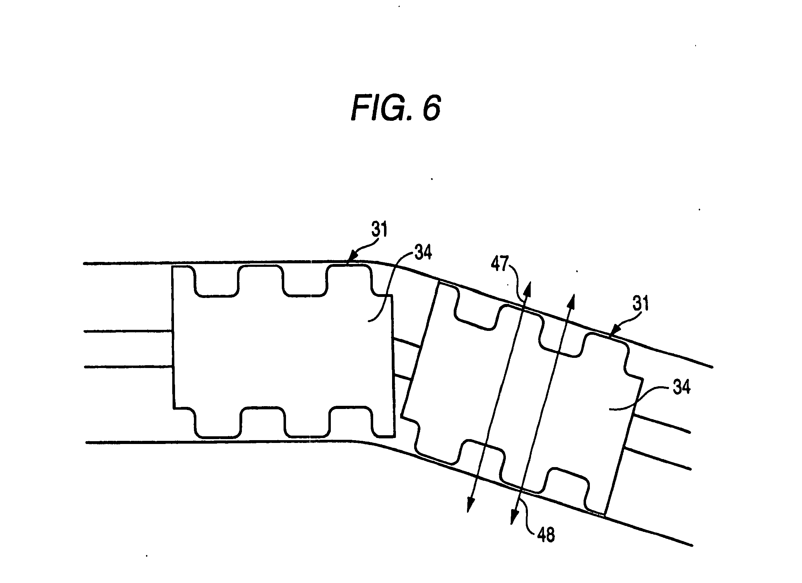

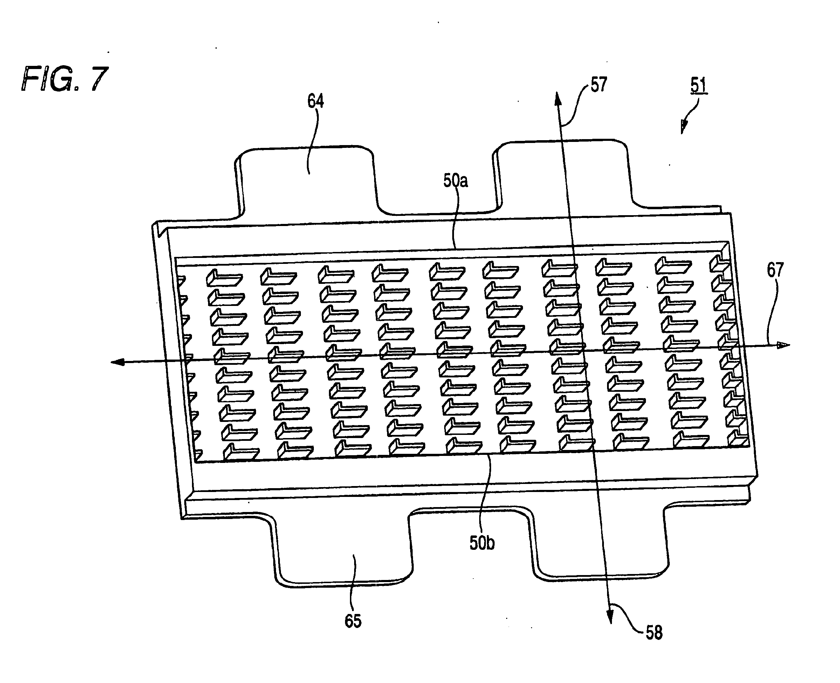

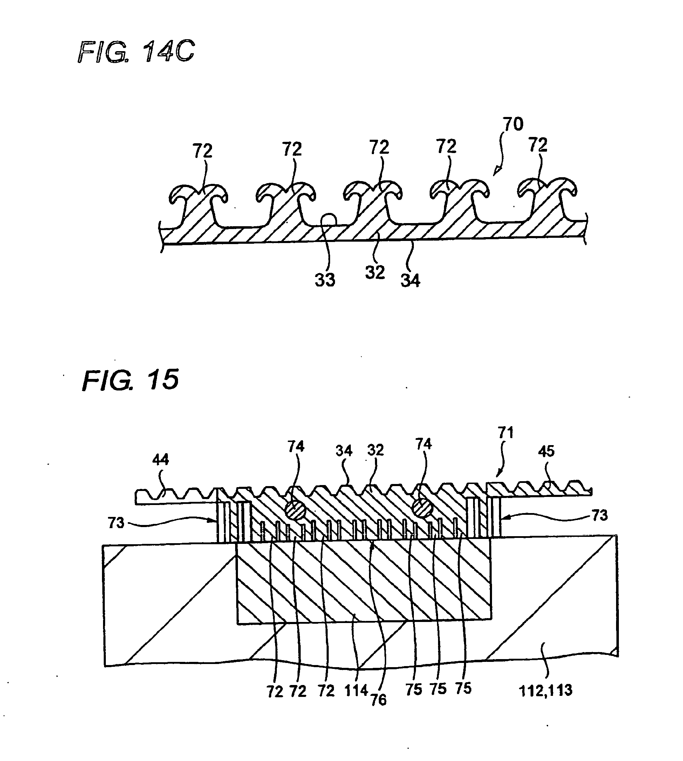

Figures 5 and 6 illustrate a hook fastener element **31**. In particular, the hook fastener element **31** has an elongated base **32** that has an upper surface **33** and a lower surface **34** opposite the upper surface **33.** The hook fastener element **31** also includes a first end **35** and a second end **36,** and a longitudinal axis **37** extends between the first end **35** and the second end **36.** A plurality of longitudinal side walls **39** extend upwardly from the upper surface **33** of the hook fastener element **31** and are disposed adjacent each longitudinal edge **40a, 40b** of the upper surface **33.** A plurality of hooks **38** adapted for engaging loop material extend upwardly from the upper surface **33** of the hook fastener element **31** and are disposed between the right and left longitudinal side walls **39.** The height of the longitudinal side walls **39** is substantially equal to a height of the plurality of hooks **38** to prevent or suppress the seeping of the foam between the hooks **38** during the molding process. The hooks **38** in Figures 5 and 7 are shown in simplified form. For example, the hooks **38** may be arrow shaped hooks as shown in Figure 14C. The hooks **38** may be J-shaped, L-shaped, or T-shaped hooks.

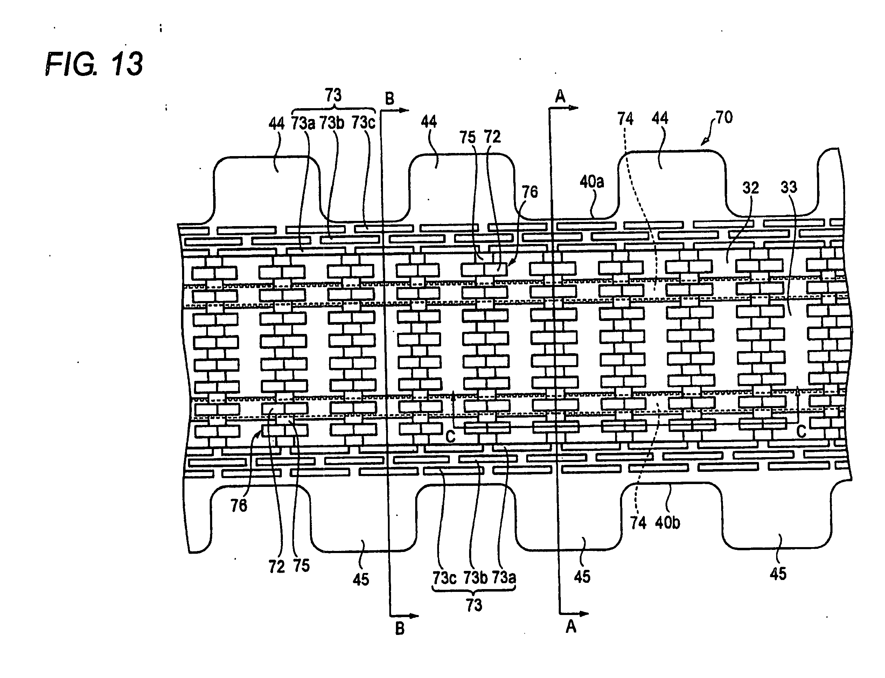

According to various embodiments, the hook fastener element **31** is formed of a plastic material (e.g., polyamides, polyurethanes, polyesters, or polybutylene terephthalate (PBT)), and the base **32,** hooks **38,** and longitudinal side walls **39** are integrally formed during a molding process. In a particular embodiment, the hook fastener element **31** further includes a monofilament or wire having magnetic properties (e.g., iron monofilament, carbon steel wire, or wire formed by hardening magnetic metal powder such as iron powder with synthetic resin) extending in a longitudinal direction of the base **32** shown in Figure 13. This magnetic monofilament or wire attracts the two or more hook fastener elements **31** toward the trench **12** having magnetic properties and described in relation to Figure 1, aligns them adjacent to each other, and holds them in the trench **12** raised from the surface of the mold.

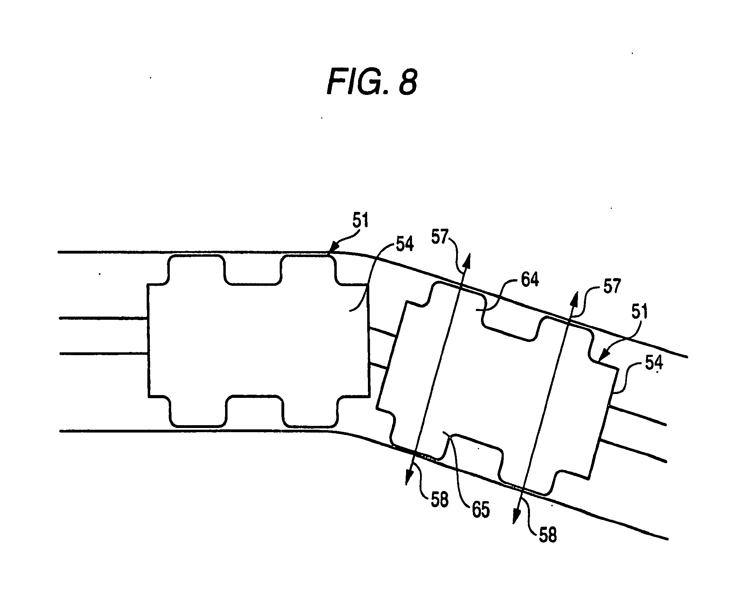

The lower surface **34** defines at least one fin **44, 45** adjacent each longitudinal edge **40a, 40b,** respectively, of the hook fastener element 31. The fins **44, 45** serve to anchor the hook fastener elements 31 into the foam material blown into the mold assembly. The fins **44, 45** extend outwardly from each longitudinal edge **40a, 40b,** respectively, in a substantially transverse direction to the longitudinal axis 37. In the embodiment shown in Figures 5 and 6, the fins **44** adjacent the first longitudinal edge **40a** are spaced apart from each other, and the fins **45** adjacent the second longitudinal edge **40b** are spaced apart from each other Transverse axes **47** extending through each fin **44** adjacent the first longitudinal edge **40a** are offset from (e.g., not coaxial with) the transverse axes **48** extending through the fins **45** adjacent the second longitudinal edge **40b.** However, in the alternative embodiment shown in Figures 7 and 8, the transverse axes **57, 58** passing through the fins **64, 65** disposed adjacent to each longitudinal edge **50a, 50b,** respectively, of the fastener element **51** are substantially coaxial. Reference numeral 67 shown in Figure 7 denotes a longitudinal axis of the hook fastener element **51.**

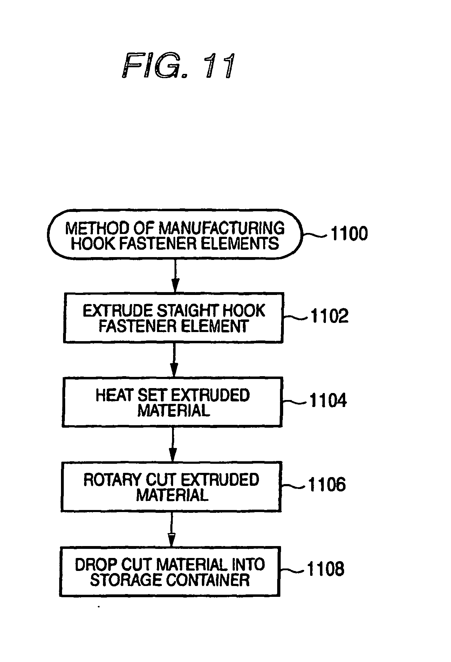

According to a particular embodiment, the hook fastener elements **31** are manufactured similarly to the straight hook fastener elements described in U.S. Published Patent-Application Number 2007/0240289. In particular, as shown in Figure 11, a method **1100** of manufacturing the hook fastener elements 31 is illustrated. Beginning at Step **1102,** a straight hook fastener (extrusion material) is extruded using steel wire and PBT. The hook fastener is contiguously formed by a known method such as a die wheel, The hook fastener is then heat set, as shown in Step **1104.** Next, the hook fastener is rotary cut into hook fastener elements 31, as shown in Step **1106,** and dropped into a storage container, as shown in Step **1108.** For example, in various embodiments, the hook fastener elements 31 are cut to be between about 10 mm and about 50 mm, and in one embodiment, the hook fastener elements 31 are cut to be about 25.4 mm long. However, the hook fastener elements 31 may be other various lengths. In other alternative embodiments, the cutting may be done using a laser cutting device. The method **1100** described above can eliminate one or more of the following steps which have been performed to manufacture known hook fasteners: spooling, storage prior to heat setting, de-curling, setting up a proper cut length, assembling two or more hook fastener elements adjacent each other prior to installing within the mold assembly, checking lengths of parts, and taking inventory of parts having various lengths.

### Methods of Installing Hook Fastener Elements into a Mold Assembly

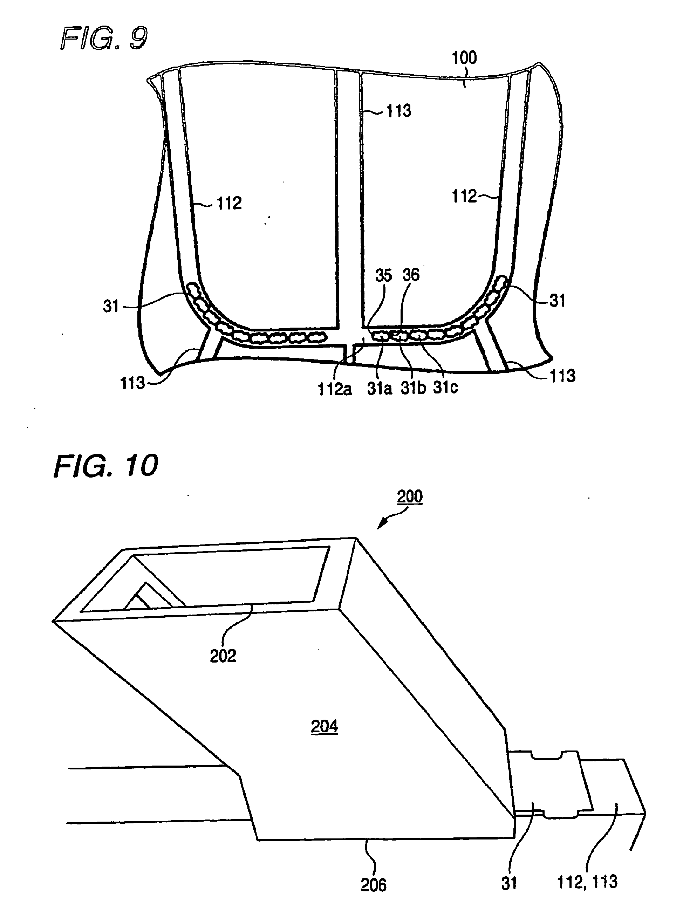

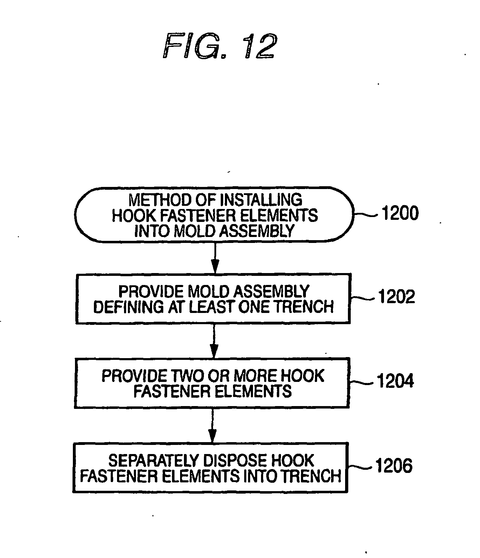

Figure 12 illustrates a method **1200** of installing a plurality of hook fastener elements **31** into a mold assembly. In addition, Figure 9 illustrates a partial plan view of a mold assembly in which a plurality of hook fastener elements **31** have been installed.

In particular, according to various embodiments, the method **1200** of installing the hook fastener elements **31** into the mold assembly begins at Step **1202** with providing a mold assembly that defines at least one trench, wherein at least a portion of the trench is magnetic. For example, in the embodiment shown in Figure 9, a mold assembly **100** having two curved trenches **112** which are raised from the surface of the mold and three straight trenches **113** is provided, and the trenches **112, 113** include a magnetic surface that extends longitudinally along the length of each trench **112, 113.** In various embodiments, the magnetic surface may be formed of magnetized iron or other ferromagnetic material, for example.

In Step **1204,** two or more hook fastener elements **31, 51,** such as described above in relation to Figures 5-8 and 11 are provided. Although Step **1204** is shown in Figure 12 to follow Step **1202,** these steps may occur simultaneously or in the reverse order (e.g., Step **1204** then Step **1202).**

Next, in Step **1206,** the two or more hook fastener elements **31, 51** provided in Step **1204** are separately disposed into the trenches **112, 113** in an end-to-end relationship substantially along the length of the trench **112, 113** such that the upper surface **33** of each hook fastener element **31** is adjacent to and cofaces the lower surface of each trench **112, 113.** Specifically, in one embodiment in which the two or more hook fastener elements **31** described in relation to Figures 5 and 6 are provided, the two or more hook fastener elements **31** are unattached to each other prior to being disposed within the trenches **112, 113.** Thus, each hook fastener element **31** is disposed within a particular trench **112, 113** one at a time, or separately. For example, as shown in Figure 9, a first hook fastener element **31a** is disposed at one end of a curved trench **112a** such that the first end **35** of the first hook fastener element **31a** is disposed substantially adjacent the end of the trench **112a.** A second hook fastener element **31b** is disposed into the trench **112a** after the first hook fastener element **31a** such that the second end **36** of the first hook fastener element **31a** is axially adjacent the first end **35** of the second hook fastener element **31b.** Similarly, a third hook fastener element **31c** is disposed into the trench **112a** after the second hook fastener element **31b** such that the second end **36** of the second hook fastener element **31b** is axially adjacent the first end **35** of the third hook fastener element **31c.** Additional hook fastener elements **31** (fourth, fifth, sixth, seventh, eighth ... hook fastener elements **31)** are subsequently disposed within the trench **112a** until hook fastener elements **31** arranged in an end-to-end relationship substantially cover the length of the trench **112a.** Likewise, multiple hook fastener elements **31** are disposed in the straight trenches **113** in the same or a similar manner.

According to one embodiment, the hook fastener elements **31** are separately disposed within the trenches **112, 113** by an operator utilizing an automated (or semiautomated) dispensing device. For example, Figure 10 illustrates one embodiment of a dispensing device **200** that includes an outlet end **206,** an inlet end **202,** and a body **204** extending therebetween. The inlet end **202** receives the hook fastener elements **31,** and the outlet end **206** releases or discharges the hook fastener elements **31.** The operator positions the outlet end **206** of the device **200** adjacent each trench **112, 113** to be filled with hook fastener elements **31** and moves the device **200** along the trench **112, 113.** The magnetic surface of the trench **112, 113** pulls the hook fastener elements 31 from the outlet end **206** towards the magnetic surface, substantially aligns the longitudinal axes of the hook fastener elements **31** along the longitudinal axis of the trench **112, 113,** and holds the hook fastener elements **31** adjacent thereto. The dispensing device **200** includes a storage portion **207** disposed between the inlet end **202** and the outlet end **206.** In the storage portion **207,** the hook fastener elements **31** are stored and aligned in the same direction. In this embodiment, the hook fastener elements **31** are laminated face-to-face.

The device **200** is configured to receive input from the operator (e.g., via a trigger button) to release the hook fastener elements **31** from the outlet end **206.** According to the invention, the device **200** is configured to sense the outlet end's **206** proximity to the trenches **112, 113** (e.g., via proximity sensors) and, in response to sensing the proximity, the device **200** is configured to release the hook fastener elements **31.** In a further alternative embodiment, the device **200** is configured to align the outlet end **206** adjacent the trenches **112, 113.** The hook fastener elements **31** may be manually inserted by the operator into the trenches **112, 113.**

Next, referring to Figures 13 to 15, another embodiment of the hook fastener element. The same or corresponding description as the above described embodiment will be omitted or simplified with the same reference numerals in the drawings.

A hook fastener element **71** according to this embodiment, is formed by cutting the hook fastener strip **70** shown in Figure 13 into suitable length.

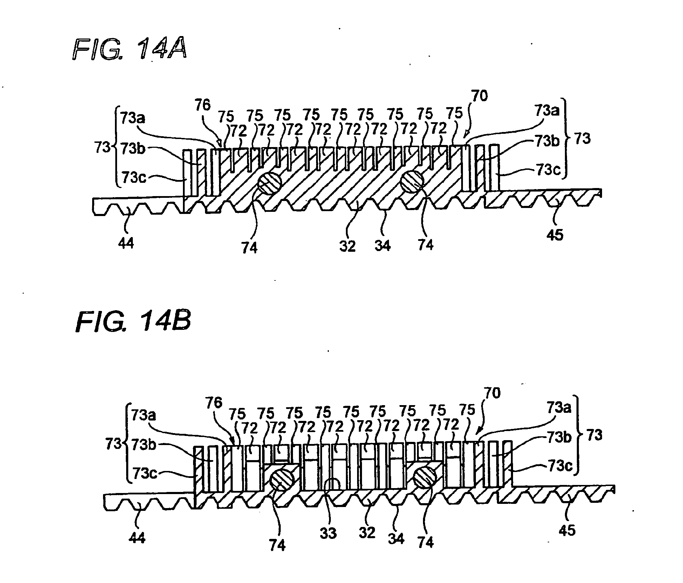

As shown in Figures 13 and 14A to 14C, the hook fastener element **71** includes an elongated base **32** that has an upper surface **33** and a lower surface **34** opposite the upper surface **33.** The hook fastener element 71 also includes a plurality of hooks **72** extending upwardly from the upper surface **33** and having a substantially anchor shaped cross section, longitudinal side walls **73** disposed adjacent to each longitudinal edge **40a, 40b** and extending upwardly from the upper surface **33,** two magnetic materials **74** disposed along the longitudinal direction in the base **32** and made of iron wire or magnetic monofilament, and fms **44, 45** extending outside in the width direction of the base **32** from each longitudinal edge **40a, 40b.**

In this embodiment, ribs (raised portions) **75** are formed between the plurality of hooks **72** disposed along the width direction of the base **32** and between the hooks **72** and the longitudinal side walls **73,** respectively. These hooks **72** and ribs **75** which are disposed along the width direction of the base **32** constitute a width side wall **76** traversing between the longitudinal side walls **73** and extending along the width direction of the base **32.**

As shown in Figure 13, each longitudinal side wall **73** is divided into a first side wall **73a**, a second side wall **73b,** a third side wall **73c** from inside of the width direction of the base **32** in this order. The first wall **73a** is formed so as to connect respective ribs **75** which are disposed outermost in the width direction of the base **32.** The second wall **73b** is formed in alignment with the plurality of hooks **72** which are disposed along the width direction of the base **32.** The third wall **73c** is formed in alignment with the first wall **73a** in the width direction of the base **32.** These first to third walls **73a, 73b, 73c** are disposed alternately so that the approximately halves of the walls are overlapped with each other in the width direction of the base **32.**

As shown in Figures 14A and 14B, in this embodiment, the longitudinal walls **73** and the width side wall **76** have the substantially same height as the hooks **72.** Accordingly, when the hook fastener strip is cut at an arbitrary position, it is possible to prevent the foam from seeping between the hooks **72** during the molding process by these longitudinal side wall **73** and the width side wall **76.**

As shown in Figure 15, the hook fastener element **71** is installed onto a magnet **114** on the trenches **112, 113** in the mold assembly **100** with the upper surface **33** facing downward. In this embodiment, upper surfaces of the trenches **112, 113** are made flat. An concave portion (not shown) for accommodating the hook fastener element **71** may be formed on the upper surfaces of the trenches **112, 113.** The other structure of this embodiment may be the same as the above described embodiment.

### CONCLUSION

Although this invention has been described in specific detail with reference to the disclosed embodiments, it will be understood that many variations and modifications may be effected within the spirit and scope of the invention as described in the appended claims.

## Claims

1. A mold assembly system comprising:
a mold defining at least one trench (112, 113) along a surface of said mold, at least a portion of said trench being magnetic;
two or more hook fastener elements (31, 51), each of said hook fastener elements (31, 51) comprising:
an elongated base (32) having an upper surface (33), a lower surface (34) opposite said upper surface (33), a first end (35), and a second end (36) opposite said first end (35), wherein a longitudinal axis (37, 67) extends between said first end (35) and said second end (36);
a plurality of hooks (38) extending upwardly from said upper surface (33); and
a magnetic material being disposed within said elongated base (32);
wherein:
said magnetic portion of said trench (112, 113) is configured to attract said two or more hook fastener elements (31, 51), align said hook fastener elements, and hold said hook fastener elements (31. 51) adjacent to each other, and
said hook fastener elements (31, 51) are unattached to each other and are disposed separately from each other in an end-to-end relationship on said magnetic trench (112,113),
**characterized in that** said mold assembly system comprises a dispensing device (200) including: an inlet end (202) configured to receive said two or more hook fastener elements (31, 51); an outlet end (206) configured to release said two or more more hook fastener elements 51); an outlet end (206) configured said release said two and more hook fastener elements (31, 51); and a body (204) extending between said inlet end (202) and said outlet end (206), and **in that** said dispensing device (200) is configured to sense whether or not said outlet end (206) is proximal to said trench (112, 113) and to release said hook fastener elements (31; 51) when sensing that said outlet end 2 is proximal to said trench (112,113).

2. The mold assembly system of Claim 1 wherein the two or more hook fastener elements (31, 51) each have a length that is substantially the same.

3. The mold assembly system of Claim 1 or 2, wherein said trench (112) is curved.

4. The mold assembly system of Claim 1, 2 or 3, wherein:
said mold comprises a first trench (112) and a second trench (113), said first trench (112) being straight, and said second trench (113) being curved,
said two or more hook fastener elements (31, 51) comprise a first hook fastener element, a second hook fastener element, a third hook fastener element, a fourth book fastener element, a fifth hook fastener element, a sixth hook fastener element a seventh hook fastener element, and an eighth hook fastener element,
said first, second, third, and fourth hook fastener elements are disposed within said first trench (112) such that said second end (36) of said first hook fastener element (31) is disposed adjacent said first end (35) of said second hook fastener element, said second end (36) of said second hook fastener element is disposed adjacent said first end (33) of said third hook fastener element, and said second end (36) of said third hook fastener element is disposed adjacent said first end (35) of said fourth hook fastener element, and
said fifth, sixth, seventh, and eighth hook fastener elements are disposed within said second trench (113) such that (1) said second end (36) of said fifth hook fastener element is disposed adjacent said first end (35) of said sixth hook fastener element, said second end (36) of said sixth hook fastener element is disposed adjacent said first end (35) of said seventh hook fastener element, and said second end (36) of said seventh hook fastener element is disposed Adjacent said first end (35) of said eighth hook fastener element, and (2) said fifth, sixth, seventh, and eighth hook fastener elements substantially follow said curvature of said second trench 113.

5. A method of assembling a mold assembly, said method comprising:
providing (1204) two or more book fastener elements (31, 51), each of said hook fastener elements (31, 51) having:
an elongated base (32) having an upper surface (33), a lower surface (34) opposite said upper surface (33), a first end (35), and a second end (36) opposite said first and (35), wherein a longitudinal axis (37, 67) extends between said first end (35) and said second end (36);
a plurality of books (38) extending upwardly from said upper surface (33); and
a magnetic material being disposed within said elongated base (32);
providing (1202) a mold (100) defining at least one trench (112, 113), at least a portion of said trench (112, 113) being magnetic;
providing a dispensing device (200) including: an inlet end (202) configured to receive said two or more hook fastener elements (31, 51); an outlet end (206) configured to release said two or more hook fastener elements (31, 51); and a body extending (204) between said inlet end (202) and said outlet end (206);
sensing whether or not said outlet end (202) is proximal to said trench (112,113); releasing said hook fastener elements (31, 51) when sensing that said outlet end (206) is proximal to said trench (112, 113);
separately disposing (1206) said two or more hook fastener elements (31, 51) into said at least one trench (112,113) in a state where the first end (35) of one of adjacent two hook fastener elements (31, 51) is disposed adjacent the second end (36) of another of the adjacent two hook fastener elements (31, 51) and the adjacent two hook fastener elements (31, 51) are separated from each other,
wherein said two or more hook fastener elements (31, 51) are unattached to each other prior to being disposed within said trench (112,113).

6. The method of Claim 5 wherein the step of providing the two or more hook fastener elements (31, 51) comprises cutting a straight hook fastener element into two or more separate hook fastener elements (31, 51).

7. The method of Claim 5 or 6 wherein the step of providing the two or more hook fastener elements (31, 51) comprises the steps of:
extruding a magnetic material and a plastic material;
forming an upper and lower surface of said extruded material, said upper and lower surface of said extruded material substantially corresponding to a shape of said upper and lower surface, respectively, of each of said two or more hook fastener elements (31, 51);
heat setting said extruded materials; and
cutting said extruded materials into separate, unattached hook fastener elements (31, 51),
wherein each of said two or more hook fastener elements has substantially the same length.

8. The method of Claim 5 wherein the dispensing device (200) has a storage portion disposed between the inlet end (202) and the outlet end (206) and configured to store the two or more hook fastener elements (31, 51) therein in an aligned state.

## Patentansprüche

1. Form-Baugruppensystem, das Folgendes umfasst:
eine Form, die wenigstens einen Graben (112, 113) entlang einer Fläche der Form definiert, wobei wenigstens ein Abschnitt des Grabens magnetisch ist,
zwei oder mehr Hakenbefestigungselemente (31, 51), wobei jedes der Hakenbefestigungselemente (31, 51) Folgendes umfasst:
eine längliche Basis (32), die eine obere Fläche (33), eine untere Fläche (34) gegenüber der oberen Fläche (33), ein erstes Ende (35) und ein zweites Ende (36) gegenüber dem ersten Ende (35) hat, wobei sich eine Längsachse (37, 67) zwischen dem ersten Ende (35) und dem zweiten Ende (36) erstreckt,
mehrere Haken (38), die sich von der oberen Fläche (33) aus nach oben erstrecken, und
ein magnetisches Material, das innerhalb der länglichen Basis (32) angeordnet ist,
wobei:
der magnetische Abschnitt des Grabens (112, 113) dafür konfiguriert ist, die zwei oder mehr Hakenbefestigungselemente (31, 51) anzuziehen, die Hakenbefestigungselemente auszurichten und die Hakenbefestigungselemente (31, 51) zueinander benachbart zu halten, und
die Hakenbefestigungselemente (31, 51) nicht aneinander befestigt sind und getrennt voneinander in einer durchgehenden Beziehung an dem magnetischen Graben (112, 113) angeordnet sind,
**dadurch gekennzeichnet, dass** das Form-Baugruppensystem eine Abgabeeinrichtung (200) umfasst, die Folgendes einschließt: ein Einlassende (202), das dafür konfiguriert ist, die zwei oder mehr Hakenbefestigungselemente (31, 51) aufzunehmen, ein Auslassende (206), das dafür konfiguriert ist, die zwei oder mehr Hakenbefestigungselemente (31, 51) freizugeben, und einen Korpus (204), der sich zwischen dem Einlassende (202) und dem Auslaßende (206) erstreckt, und dadurch, dass die Abgabeeinrichtung (200) dafür konfiguriert ist, abzufühlen, ob sich das Auslassende (206) nahe dem Graben (112, 113) befindet oder nicht, und die Hakenbefestigungselemente (31, 51) freizugeben, wenn abgefühlt wird, dass sich das Auslassende (206) nahe dem Graben (112, 113) befindet.

2. Form-Baugruppensystem nach Anspruch 1, wobei die zwei oder mehr Hakenbefestigungselemente (31, 51) jeweils eine Länge haben, die im Wesentlichen die gleiche ist.

3. Form-Baugruppensystem nach Anspruch 1 oder 2, wobei der Graben (112) gekrümmt ist.

4. Form-Baugruppensystem nach Anspruch 1, 2 oder 3, wobei:
die Form einen ersten Graben (112) und einen zweiten Graben (113) umfasst, wobei der erste Graben (112) gerade ist und der zweite Graben (113) gekrümmt ist,
die zwei oder mehr Hakenbefestigungselemente (31, 51) ein erstes Hakenbefestigungselement, ein zweites Hakenbefestigungselement, ein drittes Hakenbefestigungselement, ein viertes Hakenbefestigungselement, ein fünftes Hakenbefestigungselement, ein sechstes Hakenbefestigungselement, ein siebentes Hakenbefestigungselement und ein achtes Hakenbefestigungselement umfassen,
wobei das erste, das zweite, das dritte und das vierte Hakenbefestigungselement innerhalb des ersten Grabens (112) angeordnet sind derart, dass das zweite Ende (36) des ersten Hakenbefestigungselements (31) angrenzend an das erste Ende (35) des zweiten Hakenbefestigungselements angeordnet ist, das zweite Ende (36) des zweiten Hakenbefestigungselements angrenzend an das erste Ende (35) des dritten Hakenbefestigungselements angeordnet ist und das zweite Ende (36) des dritten Hakenbefestigungselements angrenzend an das erste Ende (35) des vierten Hakenbefestigungselements angeordnet ist, und
wobei das fünfte, das sechste, das siebente und das achte Hakenbefestigungselement innerhalb des zweiten Grabens (113) angeordnet sind derart, dass (1) das zweite Ende (36) des fünften Hakenbefestigungselements angrenzend an das erste Ende (35) des sechsten Hakenbefestigungselements angeordnet ist, das zweite Ende (36) des sechsten Hakenbefestigungselements angrenzend an das erste Ende (35) des siebenten Hakenbefestigungselements angeordnet ist und das zweite Ende (36) des siebenten Hakenbefestigungselements angrenzend an das erste Ende (35) des achten Hakenbefestigungselements angeordnet ist und (2) das fünfte, das sechste, das siebente und das achte Hakenbefestigungselement im Wesentlichen der Krümmung des zweiten Grabens (113) folgen.

5. Verfahren zum Zusammenbauen eines Form-Baugruppensystems, wobei das Verfahren Folgendes umfasst:
das Bereitstellen (1204) von zwei oder mehr Hakenbefestigungselementen (31, 51), wobei jedes der Hakenbefestigungselemente (31, 51) Folgendes hat:
eine längliche Basis (32), die eine obere Fläche (33), eine untere Fläche (34) gegenüber der oberen Fläche (33), ein erstes Ende (35) und ein zweites Ende (36) gegenüber dem ersten Ende (35) hat, wobei sich eine Längsachse (37, 67) zwischen dem ersten Ende (35) und dem zweiten Ende (36) erstreckt,
mehrere Haken (38), die sich von der oberen Fläche (33) aus nach oben erstrecken, und
ein magnetisches Material, das innerhalb der länglichen Basis (32) angeordnet ist,
das Bereitstellen (1202) einer Form (100), die wenigstens einen Graben (112, 113) definiert, wobei wenigstens ein Abschnitt des Grabens (112, 113) magnetisch ist,
das Bereitstellen einer Abgabeeinrichtung (200), die Folgendes einschließt: ein Einlassende (202), das dafür konfiguriert ist, die zwei oder mehr Hakenbefestigungselemente (31, 51) aufzunehmen, ein Auslassende (206), das dafür konfiguriert ist, die zwei oder mehr Hakenbefestigungselemente (31, 51) freizugeben, und einen Korpus (204), der sich zwischen dem Einlassende (202) und dem Auslassende (206) erstreckt,
das Abfühlen, ob sich das Auslassende (206) nahe dem Graben (112, 113) befindet oder nicht,
das Freigeben der Hakenbefestigungselemente (31, 51), wenn abgefühlt wird, dass sich das Auslassende (206) nahe dem Graben (112, 113) befindet,
das getrennte Anordnen (1206) der zwei oder mehr Hakenbefestigungselemente (31, 51) in dem wenigstens einen Graben (112, 113) in einem Zustand, in dem das erste Ende (35) eines von zwei benachbarten Hakenbefestigungselementen (31, 51) angrenzend an das zweite Ende (36) eines anderen von den zwei benachbarten Hakenbefestigungselementen (31, 51) angeordnet ist und die benachbarten zwei Hakenbefestigungselemente (31, 51) voneinander getrennt sind,
wobei die zwei oder mehr Hakenbefestigungsetemente (31, 51) nicht aneinander befestigt sind, bevor sie innerhalb des Grabens (112, 113) angeordnet werden.

6. Verfahren nach Anspruch 5, wobei der Schritt des Bereitstellens der zwei oder mehr Hakenbefestigungselemente (31, 51) das Schneiden eines geraden Hakenbefestigungselements in zwei oder mehr getrennte Hakenbefestigungselemente (31, 51) umfasst.

7. Verfahren nach Anspruch 5 oder 6, wobei der Schritt des Bereitstellens der zwei oder mehr Hakenbefestigungselemente (31, 51) die folgenden Schritte umfasst:
das Extrudieren eines magnetischen Materials und eines Kunststoffmaterials,
das Formen einer oberen und einer unteren Fläche des extrudierten Materials, wobei die obere und die untere Fläche des extrudierten Materials im Wesentlichen einer Gestalt der oberen bzw. der unteren Fläche jedes der zwei oder mehr Hakenbefestigungselemente (31, 51) entsprechen,
das Heißfixieren der extrudierten Materialien und
das Schneiden der extrudierten Materialien in getrennte, nicht aneinander befestigte Hakenbefestigungselemente (31, 51),
wobei jedes der zwei oder mehr Hakenbefestigungselemente im Wesentlichen die gleiche Länge hat.

8. Verfahren nach Anspruch 5, wobei die Abgabeeinrichtung (200) einen Aulbewahrungsabschnitt hat, der zwischen dem Einlassende (202) und dem Auslassende (206) angeordnet und dafür konfiguriert ist, die zwei oder mehr Hakenbefestigungselemente (31, 51) in demselben in einem ausgerichteten Zustand aufzubewahren.

## Revendications

1. Système d'ensemble de moule comprenant:
un moule définissant au moins une tranchée (112, 113) le long d'une surface dudit moule, au moins une partie de ladite tranchée étant magnétique;
au moins deux éléments d'attache à crochets (31, 51), chacun desdits éléments d'attache à crochets (31, 51) comprenant:
une base allongée (32) présentant une surface supérieure (33), une surface inférieure (34) opposée à ladite surface supérieure (33), une première extrémité (35) et une seconde extrémité (36) opposée à ladite première extrémité (35), dans lequel un axe longitudinal (37, 67) s'étend entre ladite première extrémité (35) et ladite seconde extrémité (36);
une pluralité de crochets (38) s'étendant vers le haut depuis ladite surface supérieure (33); et
un matériau magnétique disposé à l'intérieur de ladite base allongée (32);
dans lequel:
ladite partie magnétique de ladite tranchée (112, 113) est configurée pour attirer lesdits au moins deux éléments d'attache à crochets (31, 51), aligner lesdits éléments d'attache à crochets et maintenir lesdits éléments d'attache à crochets (31, 51) adjacents l'un à l'autre, et
lesdits éléments d'attache à crochets (31, 51) ne sont pas reliés l'un à l'autre et sont placés, séparés l'un de l'autre, en relation bout à bout sur ladite tranchée magnétique (112, 113),
**caractérisé par le fait que** ledit système d'ensemble de moule comprend un dispositif de distribution (200) comportant une extrémité d'entrée (202) configurée pour recevoir lesdits au moins deux éléments d'attache à crochets (31, 51); une extrémité de sortie (206) configurée pour libérer lesdits au moins deux éléments d'attache à crochets (31, 51); et un corps (204) s'étendant entre ladite extrémité d'entrée (202) et ladite extrémité de sortie (206), et **par le fait que**
ledit dispositif de distribution (200) est configuré pour détecter si ladite extrémité de sortie (206) se trouve ou non à proximité de ladite tranchée (112, 113) et pour libérer lesdits éléments d'attache à crochets (31, 51) lorsqu'il détecte que ladite extrémité de sortie (206) se trouve à proximité de ladite tranchée (112, 113).

2. Système d'ensemble de moule selon la revendication 1, dans lequel les au moins deux éléments d'attache à crochets (31, 51) ont tous essentiellement la même longueur.

3. Système d'ensemble de moule selon la revendication 1 ou 2, dans lequel ladite tranchée (112) est courbe.

4. Système d'ensemble de moule selon la revendication 1, 2 ou 3, dans lequel:
ledit moule comprend une première tranchée (112) et une seconde tranchée (113), ladite première tranchée (112) étant droite et ladite seconde tranchée (113) étant courbe,
lesdits au moins deux éléments d'attache à crochets (31, 51) comprennent un premier élément d'attache à crochets, un deuxième élément d'attache à crochets, un troisième élément d'attache à crochets, un quatrième élément d'attache à crochets, un cinquième élément d'attache à crochets, un sixième élément d'attache à crochets, un septième élément d'attache à crochets et un huitième élément d'attache à crochets,
lesdits premier, deuxième, troisième et quatrième éléments d'attache à crochets sont disposés dans ladite première tranchée (112) de manière à ce que ladite seconde extrémité (36) dudit premier élément d'attache à crochets (31) soit adjacente à ladite première extrémité (35) dudit second élément d'attache à crochets, ladite seconde extrémité (36) dudit deuxième élément d'attache à crochets soit adjacente à ladite première extrémité (35) dudit troisième élément d'attache à crochets et ladite seconde extrémité (36) dudit troisième élément d'attache à crochets soit adjacente à ladite première extrémité (35) dudit quatrième élément d'attache à crochets et
lesdits cinquième, sixième, septième et huitième éléments d'attache à crochets sont disposés dans ladite seconde tranchée (113) de manière à ce que (1) ladite seconde extrémité (36) dudit cinquième élément d'attache à crochets soit adjacente à ladite première extrémité (35) dudit sixième élément d'attache à crochets, ladite seconde extrémité (36) dudit sixième élément d'attache à crochets soit adjacente à ladite première extrémité (35) dudit septième élément d'attache à crochets et ladite seconde extrémité (36) dudit septième élément d'attache à crochets soit adjacente à ladite première extrémité (35) dudit huitième élément d'attache à crochets et (2) lesdits cinquième, sixième, septième et huitième éléments d'attache à crochets suivent essentiellement ladite courbe de ladite seconde tranchée (113).

5. Procédé d'assemblage d'un ensemble de moule, ledit procédé comprenant:
la fourniture (1204) d'au moins deux éléments d'attache à crochets (31, 51), chacun desdits éléments d'attache à crochets (31, 51) comprenant:
une base allongée (32) présentant une surface supérieure (33), une surface inférieure (34) opposée à ladite surface supérieure (33), une première extrémité (35) et une seconde extrémité (36) opposée à ladite première extrémité (35), dans lequel un axe longitudinal (37, 67) s'étend entre ladite première extrémité (35) et ladite seconde extrémité (36);
une pluralité de crochets (38) s'étendant vers le haut depuis ladite surface supérieure (33); et
un matériau magnétique disposé à l'intérieur de ladite base allongée (32);
la fourniture (1202) d'un moule (100) définissant au moins une tranchée (112, 113), au moins une partie de ladite tranchée (112, 113) étant magnétique;
la fourniture d'un dispositif de distribution (200) comportant une extrémité d'entrée (202) configurée pour recevoir lesdits au moins deux éléments d'attache à crochets (31, 51); une extrémité de sortie (206) configurée pour libérer lesdits au moins deux éléments d'attache à crochets (31, 51); et un corps (204) s'étendant entre ladite extrémité d'entrée (202) et ladite extrémité de sortie (206);
la détention de la proximité ou non de ladite extrémité de sortie (206) par rapport à ladite tranchée (112, 113);
la libération desdits éléments d'attache à crochets (31, 51) lorsque le dispositif détecte que ladite extrémité de sortie (206) se trouve à proximité de ladite tranchée (112, 113);
la disposition séparée (1206) desdits au moins deux éléments d'attache à crochets (31, 51) dans ladite au moins une tranchée (112, 113) dans une position où la première extrémité (35) de l'un des deux éléments d'attache à crochets adjacents (31, 51) est adjacente à la seconde extrémité (36) d'un autre des deux éléments d'attache à crochets adjacents (31, 51) et les deux éléments d'attache à crochets adjacents (31, 51) sont séparés l'un de l'autre,
dans lequel lesdits au moins deux éléments d'attache à crochets (31, 51) ne sont pas reliés l'un à l'autre avant d'être placés dans ladite tranchée (112, 113).

6. Procédé selon la revendication 5, dans lequel l'étape de fourniture des au moins deux éléments d'attache à crochets (31, 51) comprend le découpage d'un élément d'attache à crochets droit en au moins deux éléments d'attache à crochets séparés (31, 51).

7. Procédé selon la revendication 5 ou 6, dans lequel l'étape de fourniture des au moins deux éléments d'attache à crochets (31, 51) comprend les étapes:
d'extrusion d'un matériau magnétique et d'un matériau plastique;
de formation d'une surface supérieure et d'une surface inférieure dudit matériau extrudé, lesdites surfaces supérieure et inférieure dudit matériau extrudé correspondant sensiblement à une forme desdites surfaces supérieure et inférieure, respectivement, de chacun desdits au moins deux éléments d'attache à crochets (31, 51);
de thermodurcissage desdits matériaux extrudés; et
de découpage desdits matériaux extrudés en éléments d'attache à crochets (31, 51) séparés non reliés,
dans lequel lesdits au moins deux éléments d'attache à crochets ont chacun sensiblement la même longueur.

8. Procédé selon la revendication 5, dans lequel le dispositif de distribution (200) comporte une partie de stockage située entre l'extrémité d'entrée (202) et l'extrémité de sortie (206) et configurée pour stocker à cet endroit les au moins deux éléments d'attache à crochets (31, 51) en position alignée.
